# EUROPÄISCHE PATENTANMELDUNG

(11) **EP 4 357 041 A1**
(43) Veröffentlichungstag der Anmeldung: **24.04.2024**
(21) Anmeldenummer: 22202911.8
(22) Anmeldetag: 21.10.2022
(51) Int. Cl.: B21D 5/00, B21D 5/04, B21D 43/10, B25J 9/16, G01B 11/02, G06T 7/73, G01B 11/00

(54) **VORRICHTUNG UND VERFAHREN ZUM AUTOMATISIERTEN BIEGEN VON WERKSTÜCKEN**

(71) Anmelder: Bystronic Laser AG, 3362 Niederönz (CH)
(72) Erfinder: Stäger, Manuel, 4552 Derendingen (CH); Zwickl, Diego, 6043 Adligenswil (CH)
(74) Vertreter: Fink Numrich Patentanwälte PartmbB

(57) **Zusammenfassung**

Die Erfindung betrifft eine Vorrichtung zum automatisierten Biegen von Werkstücken (10), umfassend ein Lager (2) für Werkstücke (10), eine robotische Vorrichtung (3) zur Handhabung der Werkstücke (10) und eine Biegemaschine (5) zum Verformen zumindest eines Teils der mit der robotischen Vorrichtung (3) gehandhabten Werkstücke (10) über einen Biegevorgang, wobei die Vorrichtung (1) ferner eine Bilderfassungseinrichtung (7) zum Erfassen von Bilddaten (ID) über zu handhabende Werkstücke (10) im Lager (2) sowie eine Steuereinrichtung (6) zum Steuern der robotischen Vorrichtung (3) unter Verwendung der Bilddaten (ID) enthält. Die Bilderfassungseinrichtung (7) ist über eine Aktorik (8) in unterschiedliche Positionen (CP1, CP2) bewegbar ist, um Bilddaten (ID) von verschiedenen, zu den jeweiligen Positionen (CP1, CP2) gehörigen Lagerabschnitten (201, 202, 203, 204) des Lagers (2) zu erfassen, wobei am Lager (2) eine Mehrzahl von Markierungen (M1, M2, ..., M10) vorgesehen ist, deren Positionen (PO1, PO2, ..., PO10) relativ zu einem Referenzkoordinatensystem (RC) in der Steuereinrichtung (6) gespeichert sind, wobei in einer jeweiligen Position (CP1, CP2) der Bilderfassungseinrichtung (7) im zugehörigen Lagerabschnitt (201, 202, 203, 204) wenigstens zwei Markierungen (M1, M2, ..., M10) enthalten sind und die Steuereinrichtung (6) dazu konfiguriert ist, eine Auswertung der Bilddaten (ID) des zugehörigen Lagerabschnitts (201, 202, 203, 204) durchzuführen, bei der mittels der gespeicherten Positionen (PO1, PO2, ..., PO10) der Markierungen (M1, M2, ..., M10) im zugehörigen Lagerabschnitt (201, 202, 203, 204) die Lage (CL) der Bilderfassungseinrichtung (7) und/oder die Lage (WL) eines handzuhabenden Werkstücks (10) relativ zu dem Referenzkoordinatensystem (RC) automatisch ermittelt wird.

## Beschreibung

Die Erfindung betrifft eine Vorrichtung und ein Verfahren zum automatisierten Biegen von Werkstücken.

Aus dem Stand der Technik sind Vorrichtungen zum automatisierten Biegen von Werkstücken unter Verwendung einer robotischen Vorrichtung zur Handhabung der Werkstücke bekannt. Ein jeweiliges zu handhabendes Werkstück wird dabei durch die robotische Vorrichtung automatisiert aus einem Lager entnommen und einer Biegemaschine zugeführt, die das Verformen des Werkstücks über einen Biegevorgang bewirkt. Damit die robotische Vorrichtung das entsprechende Werkstück aus dem Lager korrekt entnehmen kann, werden Bilddaten einer Bilderfassungseinrichtung verwendet, aus denen die Lage des zu handhabenden Werkstücks im Lager erkannt wird. Mittels der erkannten Lage wird dann die robotische Vorrichtung geeignet angesteuert.

Die Druckschrift WO 2020/250761 A1 zeigt eine Vorrichtung zum automatisierten Biegen von Werkstücken, wobei Bilder eines Werkstückstapels in einem Lager durch eine monokulare Kamera fotografiert werden und mittels Mustererkennung ausgewertet werden. Mittels mehrerer Modelle wird die Lage des obersten Werkstücks auf dem Werkstückstapel detektiert.

In dem Dokument WO 2021/079802 A1 ist ein Verfahren zum automatisierten Biegen von Werkstücken beschrieben, bei dem unter Verwendung von Bildern, die mittels einer Kamera oberhalb der Position eines Werkstücks fotografiert werden, die Lage des Werkstücks bestimmt wird und basierend darauf eine robotische Vorrichtung zum Transport des Werkstücks geeignet gesteuert wird.

Herkömmliche Vorrichtungen zum automatisierten Biegen von Werkstücken weisen den Nachteil auf, dass die Bilderfassungseinrichtung, die zur Erfassung von zu handhabenden Werkstücken in einem Lager genutzt wird, an einer festen Position angeordnet ist, so dass das Sichtfeld der Bilderfassungseinrichtung statisch ist und nur ein begrenzter räumlicher Bereich von zu handhabenden Werkstücken erfasst werden kann.

Aufgabe der Erfindung ist es, eine Vorrichtung und ein Verfahren zum automatisierten Biegen von Werkstücken zu schaffen, mit denen zu handhabende Werkstücke in einem größeren räumlichen Bereich erfasst werden können.

Diese Aufgabe wird durch die Vorrichtung gemäß Patentanspruch 1 bzw. das Verfahren gemäß Patentanspruch 15 gelöst. Weiterbildungen der Erfindung sind in den abhängigen Ansprüchen definiert.

Die erfindungsgemäße Vorrichtung dient zum automatisierten Biegen von Werkstücken, vorzugsweise von metallischen Werkstücken, wie z.B. Blechen. Die Vorrichtung umfasst ein Lager für die entsprechenden Werkstücke, eine robotische Vorrichtung zur Handhabung der Werkstücke sowie eine Biegemaschine zum Verformen zumindest eines Teils der mit der robotischen Vorrichtung gehandhabten Werkstücke über einen Biegevorgang. Vorzugsweise handelt es sich bei der Biegemaschine um eine Abkantpresse.

Die erfindungsgemäße Vorrichtung beinhaltet ferner eine Bilderfassungseinrichtung zum Erfassen von Bilddaten über zu handhabende Werkstücke im Lager sowie eine Steuereinrichtung zum Steuern der robotischen Vorrichtung unter Verwendung dieser Bilddaten.

In der erfindungsgemäßen Vorrichtung ist die Bilderfassungseinrichtung über eine Aktorik in unterschiedliche Positionen bewegbar, um Bilddaten von verschiedenen, zu den jeweiligen Positionen gehörigen Lagerabschnitten des Lagers zu erfassen. Die Aktorik ist vorzugsweise über die obige Steuereinrichtung steuerbar. Ferner ist am Lager eine Mehrzahl von Markierungen vorgesehen, deren Positionen relativ zu einem Referenzkoordinatensystem in der Steuereinrichtung gespeichert sind, d.h. die Positionen der Markierungen sind vorbekannt. Vorzugsweise sind die Positionen der Markierungen dreidimensionale räumliche Positionen. Gegebenenfalls können die Positionen jedoch auch zweidimensionale Positionen sein, z.B. wenn die Höhenpositionen von zu handhabenden Werkstücken aus einer anderen Informationsquelle als den Bilddaten gewonnen werden. Bei dem Referenzkoordinatensystem handelt es sich um ein Koordinatensystem, das in Bezug auf die erfindungsgemäße Vorrichtung ortsfest ist und Relativbewegungen von Komponenten innerhalb der Vorrichtung, wie z.B. den Bewegungen der robotischen Vorrichtung, nicht folgt.

Erfindungsgemäß sind in einer jeweiligen Position der Bilderfassungseinrichtung im zugehörigen Lagerabschnitt wenigstens zwei Markierungen der Mehrzahl von Markierungen enthalten und die Steuereinrichtung ist dazu konfiguriert, eine Auswertung der Bilddaten des zugehörigen Lagerabschnitts durchzuführen, bei der mittels der gespeicherten Positionen der Markierungen im zugehörigen Lagerabschnitt die Lage der Bilderfassungseinrichtung und/oder die Lage eines zu handzuhabenden Werkstücks relativ zu dem Referenzkoordinatensystem automatisch ermittelt wird. Die Lage der Bilderfassungseinrichtung bzw. des zu handhabenden Werkstücks beschreibt dabei Position und Ausrichtung der Bilderfassungseinrichtung bzw. des zu handhabenden Werkstücks, wobei die Position vorzugsweise eine dreidimensionale räumliche Position ist und die Ausrichtung vorzugsweise eine dreidimensionale räumliche Richtung ist.

Die im erfindungsgemäßen Verfahren verwendeten Markierungen können passive und/oder aktive Markierungen sein. Aus passiven Markierungen können keine Informationen zu deren Position ausgelesen werden. Deshalb wurde vor Durchführung des erfindungsgemäßen Verfahrens die Position einer jeweiligen passiven Markierung relativ zu dem Referenzkoordinatensystem mit einer geeigneten Messung ermittelt und in der Steuereinrichtung hinterlegt. Im Unterschied hierzu sind in aktiven Markierungen Informationen zu deren Position gespeichert. Diese Informationen werden vor Durchführung des erfindungsgemäßen Verfahrens aus den aktiven Markierungen ausgelesen, um dann in der Steuereinrichtung dem Referenzkoordinatensystem zugeordnet und dort gespeichert zu werden.

Die erfindungsgemäße Vorrichtung ermöglicht ein größeres Sichtfeld auf ein entsprechendes Werkstücklager durch Positionierung der Bilderfassungseinrichtung in unterschiedliche Positionen. Gleichzeitig wird dabei eine externe Kalibrierung der Bilderfassungseinrichtung in ihrer aktuellen Position ermöglicht, wobei hierfür geeignete Markierungen am Lager genutzt werden. Mittels der externen Kalibrierung wird für jede Position der Bilderfassungseinrichtung sichergestellt, dass deren Lage im Raum bekannt ist. Demzufolge kann durch Bewegung der Bilderfassungseinrichtung ein größerer Raumbereich von Werkstücken erfasst werden.

In einer bevorzugten Ausführungsform der erfindungsgemäßen Vorrichtung wird aus der Lage der Bilderfassungseinrichtung die Lage eines zu handhabenden Werkstücks im zugehörigen Lagerabschnitt relativ zu dem Referenzkoordinatensystem bestimmt.

Diese Lage kann dann zum Handhaben entsprechender Werkstücke genutzt werden. Die Lage des zu handhabenden Werkstücks beschreibt dessen Position und Ausrichtung, wobei die Position vorzugsweise eine dreidimensionale räumliche Position ist und die Ausrichtung vorzugsweise eine dreidimensionale räumliche Richtung ist.

In einer besonders bevorzugten Ausführungsform ist die Bilderfassungseinrichtung eine 3D-Bilderfassungseinrichtung, d.h. eine Bilderfassungseinrichtung, mit der dreidimensionale Bilddaten erfasst werden. Vorzugsweise ist die 3D-Bilderfassungseinrichtung eine 3D-Kameraeinrichtung. Gegebenenfalls kann in der erfindungsgemäßen Vorrichtung auch eine 2D-Bilderfassungseinrichtung zum Einsatz kommen. Dies ist beispielsweise dann der Fall, wenn die Höhenpositionen von Werkstücken aus einer anderen Informationsquelle als den Bilddaten gewonnen werden.

In einer weiteren bevorzugten Ausführungsform der erfindungsgemäßen Vorrichtung sind den Lagerabschnitten separate Lagerbereiche für Werkstücke zugeordnet und ein jeweiliger Lagerabschnitt deckt den zugeordneten Lagerbereich vertikal in Draufsicht komplett ab. Unter separaten Lagerbereichen sind dabei räumlich disjunkte Lagerbereiche zu verstehen. Im Unterschied hierzu müssen die oben definierten Lagerabschnitte mit den darin enthaltenen Markierungen nicht räumlich disjunkt sein. Das heißt, ein Lagerabschnitt kann größer als ein Lagerbereich sein und die gleichen Markierungen können zu mehreren Lagerabschnitten gehören.

In einer bevorzugten Variante der soeben beschriebenen Ausführungsform ist ein jeweiliger Lagerbereich ein Träger zur Ablage von Werkstücken, wobei der Träger vorzugsweise eine Palette ist. Ferner sind die Werkstücke in dem entsprechenden Lagerbereich vorzugsweise stapelbar.

In einer weiteren bevorzugten Ausführungsform der erfindungsgemäßen Vorrichtung sind die Lagerabschnitte mit den darin enthaltenen Markierungen in einer vorgegebenen Richtung nebeneinander angeordnet.

In einer weiteren Variante ist die Bilderfassungseinrichtung mittels der Aktorik linear bewegbar, wodurch die Veränderung der Position der Bilderfassungsvorrichtung auf einfache Weise bewirkt werden kann. Vorzugsweise erfolgt die lineare Bewegung in der oben definierten vorgegebenen Richtung, in der die Lagerabschnitte nebeneinander angeordnet sind.

In einer weiteren, besonders bevorzugten Ausführungsform der erfindungsgemäßen Vorrichtung sind alle Markierungen der Mehrzahl von Markierungen am Boden des Lagers und/oder bis zu 500 mm über dem Boden angeordnet, wobei die Bilderfassungseinrichtung oberhalb des Lagers bewegbar ist. Hierdurch kann die Erfassung der Markierungen mittels der Bilderfassungseinrichtung besonders zuverlässig sichergestellt werden. Dabei brauchen die Markierungen nicht alle auf der gleichen Ebene liegen. Vielmehr können die Markierungen in mehreren unterschiedlichen Ebenen positioniert sein. Hierdurch wird die Genauigkeit in vertikaler Richtung erhöht.

Die Anzahl der in der erfindungsgemäßen Vorrichtung vorgesehenen Lagerabschnitte kann unterschiedlich gewählt werden. Je höher diese Anzahl ist, umso größer ist der räumliche Bereich, in dem gelagerte Werkstücke erfasst werden können. In einer bevorzugten Variante sind zumindest drei Lagerabschnitte, vorzugsweise 3 bis 10 Lagerabschnitten und besonders bevorzugt vier Lagerabschnitte, vorgesehen.

In einer weiteren bevorzugten Variante repräsentieren die wenigstens zwei Markierungen in einem jeweiligen Lagerabschnitt zumindest eines Teils der Lagerabschnitte und vorzugsweise in jedem Lagerabschnitt eine Teilmenge der Mehrzahl von Markierungen. Die Markierungen unterscheiden sich somit zumindest zum Teil zwischen den Lagerabschnitten.

In einer weiteren bevorzugten Variante sind die wenigstens zwei Markierungen in einem jeweiligen Lagerabschnitt zumindest eines Teils der Lagerabschnitte und vorzugsweise in jedem Lagerabschnitt zumindest drei Markierungen, vorzugsweise vier Markierungen. Durch die Verwendung von mehr als zwei Markierungen wird die Genauigkeit der Positionsbestimmung der Bilderfassungseinrichtung verbessert.

In einer weiteren bevorzugten Ausführungsform der erfindungsgemäßen Vorrichtung gehören eine oder mehrere Markierungen und vorzugsweise zwei Markierungen in einem jeweiligen Lagerabschnitt zumindest eines Teils der Lagerabschnitte und vorzugsweise in jedem Lagerabschnitt auch noch zu einem anderen Lagerabschnitt als dem jeweiligen Lagerabschnitt. Zumindest ein Teil der Markierungen werden somit gleichzeitig für mehrere Lagerabschnitte verwendet, so dass die Anzahl der Markierungen reduziert werden kann.

In einer weiteren bevorzugten Ausgestaltung weist ein jeweiliger Lagerabschnitt zumindest eines Teils der Lagerabschnitte und vorzugsweise jeder Lagerabschnitt in vertikaler Draufsicht einen polygonförmigen und insbesondere rechteckigen Umriss auf. Mit derartigen Umrissen wird die Auswertung der Bilddaten zur Bestimmung der Lage der Bilderfassungseinrichtung vereinfacht und ermöglicht gegebenenfalls die unmittelbare Ermittlung der Lage der zu handhabenden Werkstücke. Vorzugsweise ist in einer oder mehreren Ecken und insbesondere in jeder Ecke des polygonförmigen Umrisses jeweils eine Markierung vorgesehen.

In einer weiteren bevorzugten Ausgestaltung sind die Markierungen zur Unterscheidbarkeit durch die Steuereinrichtung optisch unterschiedlich ausgestaltet. Vorzugsweise enthalten sie eine optische Codierung. Hierdurch kann die Auswertung der Bilddaten vereinfacht werden und die Genauigkeit der Lagebestimmung der Bilderfassungseinrichtung verbessert werden. Die optisch unterschiedlichen Markierungen können beispielsweise farblich unterschiedlich ausgestaltet sein. Im Falle, dass die Markierungen eine optische Codierung enthalten, handelt es sich vorzugsweise um eine binäre Codierung, die sehr einfach in der Steuereinrichtung der erfindungsgemäßen Vorrichtung verarbeitbar ist.

In einer weiteren bevorzugten Variante umfasst eine jeweilige Markierung zumindest eines Teils der Mehrzahl von Markierungen und insbesondere jede Markierung zumindest zwei Kreissegmente mit einem gemeinsamen Segmentmittelpunkt. Mittels solcher Markierungen kann deren Position aus den Bilddaten sehr genau extrahiert werden und mit den in der Steuereinrichtung hinterlegten Positionen abgeglichen werden. Hierdurch kann die Genauigkeit der Lagebestimmung der Bilderfassungseinrichtung weiter verbessert werden.

Die Erfindung betrifft ferner ein Verfahren zum automatisierten Biegen von Werkstücken mit der erfindungsgemäßen Vorrichtung bzw. einer oder mehrerer bevorzugter Varianten dieser Vorrichtung. Mit anderen Worten wird in dem Verfahren eine erfindungsgemäße Vorrichtung genutzt, die ein Lager für Werkstücke, eine robotische Vorrichtung zur Handhabung der Werkstücke und eine Biegemaschine zum Verformen zumindest eines Teils der mit der robotischen Vorrichtung gehandhabten Werkstücke über einen Biegevorgang umfasst, wobei in der Vorrichtung ferner eine Bilderfassungseinrichtung zum Erfassen von Bilddaten über zu handhabende Werkstücke im Lager und eine Steuereinrichtung zum Steuern der robotischen Vorrichtung unter Verwendung der Bilddaten vorgesehen ist.

Im Rahmen des erfindungsgemäßen Verfahrens wird die Bilderfassungseinrichtung über eine Aktorik, die vorzugsweise über die obige Steuereinrichtung gesteuert wird, in unterschiedliche Positionen bewegt, um Bilddaten von verschiedenen, zu den jeweiligen Positionen gehörigen Lagerabschnitten des Lagers zu erfassen, wobei am Lager eine Mehrzahl von Markierungen vorgesehen ist, deren Positionen relativ zu einem Referenzkoordinatensystem in der Steuereinrichtung gespeichert sind, wobei in einer jeweiligen Position der Bilderfassungseinrichtung im zugehörigen Lagerabschnitt wenigstens zwei Markierungen der Mehrzahl von Markierungen enthalten sind. Darüber hinaus führt die Steuereinrichtung in dem erfindungsgemäßen Verfahren eine Auswertung der Bilddaten des zugehörigen Lagerabschnitts durch, bei der mittels der gespeicherten Positionen der Markierungen im zugehörigen Lagerabschnitt die Lage der Bilderfassungseinrichtung relativ zu dem Referenzkoordinatensystem ermittelt wird.

Alle ergänzenden Ausführungen, die weiter oben im Rahmen der Erläuterung der erfindungsgemäßen Vorrichtung gemacht wurden, sind auch auf das erfindungsgemäße Verfahren anwendbar. Insbesondere beschreibt die Lage der Bilderfassungseinrichtung deren Position und Ausrichtung, wobei die Position vorzugsweise eine dreidimensionale räumliche Position ist und die Ausrichtung vorzugsweise eine dreidimensionale räumliche Richtung ist. Vorzugsweise wird ferner aus der Lage der Bilderfassungseinrichtung die Lage eines zu handhabenden Werkstücks im zugehörigen Lagerabschnitt relativ zu dem Referenzkoordinatensystem bestimmt. Diese Lage kann dann zum Handhaben entsprechender Werkstücke genutzt werden. Die Lage des zu handhabenden Werkstücks beschreibt dessen Position und Ausrichtung, wobei die Position vorzugsweise eine dreidimensionale räumliche Position ist und die Ausrichtung vorzugsweise eine dreidimensionale räumliche Richtung ist.

Ausführungsbeispiele der Erfindung werden nachfolgend anhand der beigefügten Figuren detailliert beschrieben.

Es zeigen:
- Fig. 1: eine schematische Darstellung des Aufbaus einer Variante einer erfindungsgemäßen Vorrichtung;
- Fig. 2: eine schematische Seitenansicht eines Lagers für Werkstücke mit darüber angeordneter Bilderfassungseinrichtung gemäß einer bevorzugten Ausgestaltung der erfindungsgemäßen Vorrichtung;
- Fig. 3: eine Draufsicht auf das Lager der Fig. 2; und
- Fig. 4: ein Ablaufdiagramm, welches die Schritte verdeutlicht, die von einer Ausführungsform der erfindungsgemäßen Vorrichtung durchgeführt werden.

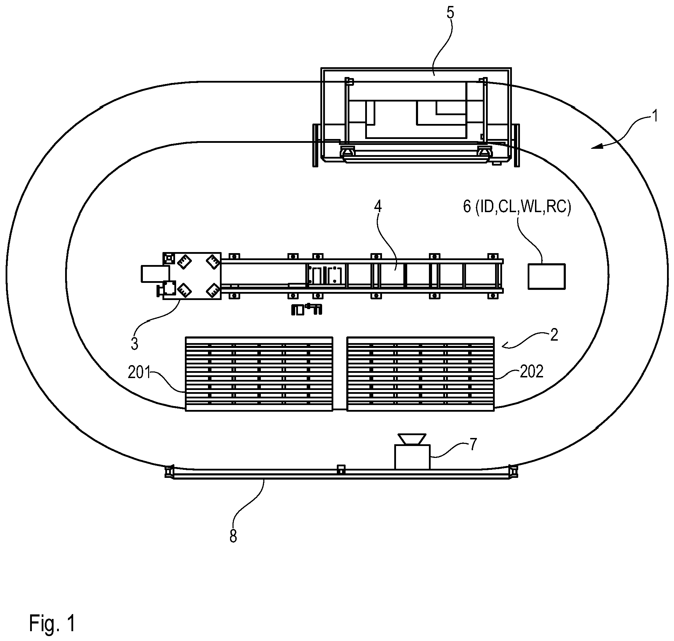

Fig. 1 zeigt in schematischer Ansicht eine Ausgestaltung einer erfindungsgemäßen Vorrichtung zum automatisierten Biegen von Werkstücken. Die Vorrichtung ist mit Bezugszeichen 1 bezeichnet und umfasst in an sich bekannter Weise ein Lager 2, das in der gezeigten Ausführungsform zwei Lagerabschnitte 201 und 202 enthält. In den Lagerabschnitten sind entsprechende Paletten vorgesehen, auf denen die zu handhabenden Werkstücke in der Form von Blechen stapelbar sind. Oberhalb des Lagers 2 befindet sich eine bewegbare Bilderfassungseinrichtung 7 in der Form einer 3D-Kamera, die mittels einer Aktorik 8 entlang einer linearen Aufhängung bewegbar ist. Mit anderen Worten enthält die Aufhängung eine entsprechende Aktorik 8, welche die Bewegung der Bilderfassungseinrichtung 7 entlang der Aufhängung ermöglicht.

Zum automatischen Handhaben entsprechender Werkstücke in dem Lager 2 ist eine robotische Vorrichtung 3 vorgesehen, die entlang einer Führung 4 bewegbar ist. Die lediglich schematisch wiedergegebene robotische Vorrichtung 3 kann über eine (nicht gezeigte) Gelenkanordnung automatisch Werkstücke aus dem Lager entnehmen, z.B. mittels eines Greifers oder über Saugnäpfe. Ein entnommenes Werkstück wird dann durch die robotische Vorrichtung 3 hin zu einer an sich bekannten Biegemaschine 5 transportiert, die in Fig. 1 wiederum nur schematisch angedeutet ist. Die robotische Vorrichtung 3 führt das zu handhabende Werkstück der Biegemaschine 5 zu, welche durch Kraftausübung auf das Werkstück über Biegewangen dessen Verformung bewirkt. Anschließend kann das Werkstück in einem entsprechenden Lager für verformte Werkstücke abgelegt werden, wobei dieses Lager auch in dem Lager 2 enthalten sein kann.

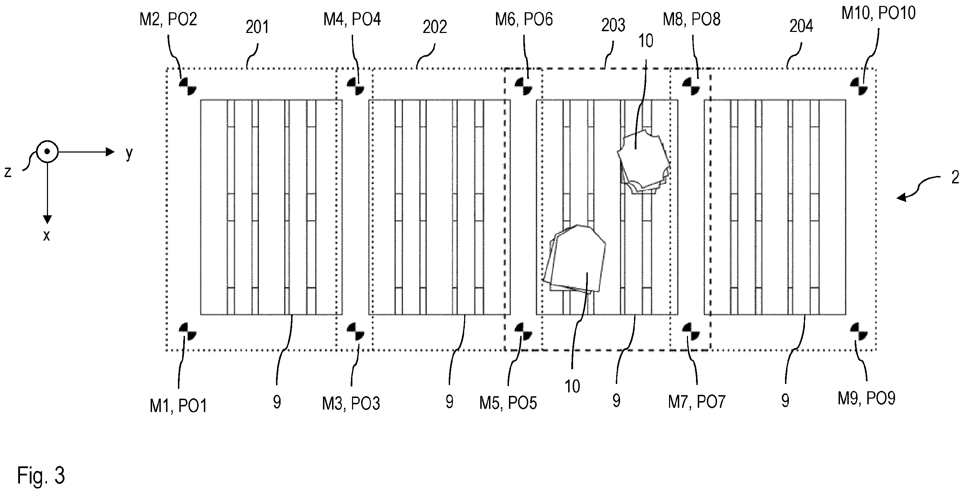

Um das automatische Handhaben der Werkstücke durch die robotische Vorrichtung 3 zu gewährleisten, ist eine Steuereinrichtung 6 vorgesehen, welche mit der Bilderfassungseinrichtung 7 erfasste Bilddaten ID auswertet. Dabei ist zu beachten, dass innerhalb des Lagers 2 eine Mehrzahl von Markierungen mit vorbekannten dreidimensionalen Positionen vorgesehen ist, wobei die Markierungen mit ihren vorbekannten Positionen bei der Verarbeitung der Bilddaten ID mit der Steuereinrichtung 6 berücksichtigt werden. Aus Übersichtlichkeitsgründen sind die Markierungen nicht aus der schematischen Darstellung der Fig. 1 ersichtlich. Die Markierungen ergeben sich jedoch aus der weiter unten beschriebenen Ausführungsform einer erfindungsgemäßen Vorrichtung (siehe insbesondere Fig. 3).

Durch Auswertung der Bilddaten ID mit den darin enthaltenen Markierungen kann die aktuelle dreidimensionale Lage CL der Bilderfassungseinrichtung 7 in Bezug auf ein ortsfestes Referenzkoordinatensystem RC ermittelt werden, indem die in den Bilddaten enthaltenen Markierungen mit deren vorbekannten Positionen abgeglichen werden. Hierzu können an sich bekannte Verfahren genutzt werden. Auf diese Weise kann für beliebige Positionen der Bilderfassungseinrichtung 7 deren externe Kalibrierung durchgeführt werden. Mit der ermittelten Lage CL der Bilderfassungseinrichtung 7 kann dann durch weitergehende Auswertung der erfassten Bilddaten ID die dreidimensionale Lage WL eines entsprechenden, durch die robotische Vorrichtung 3 zu greifenden Werkstücks in dem ortsfesten Referenzkoordinatensystem RC wiederum mit bekannten Methoden bestimmt werden. Mittels dieser Lageinformation kann die robotische Vorrichtung 3 mit der Steuereinrichtung 6 geeignet angesteuert wird, um das entsprechende Werkstück aus dem Lager 2 zu entnehmen und der Biegemaschine 5 zur Durchführung seiner Verformung zuzuführen.

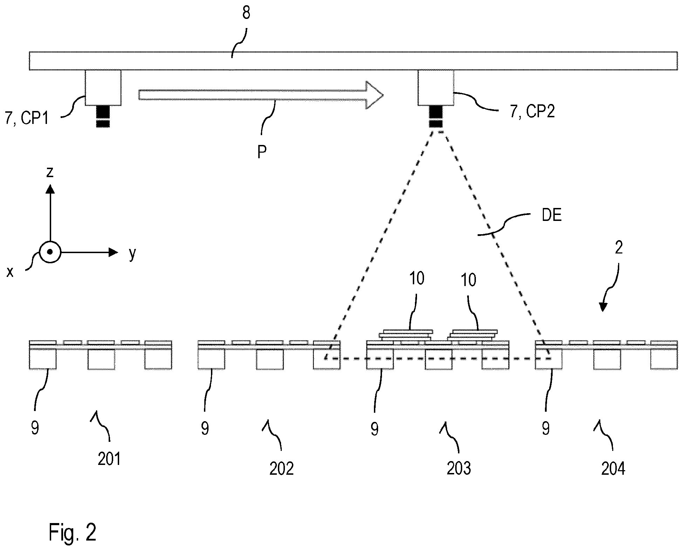

Fig. 2 zeigt in Seitenansicht ein Lager 2 in einer Variante einer erfindungsgemäßen Vorrichtung. Im Unterschied zur Vorrichtung der Fig. 1 enthält das Lager 2 insgesamt vier Lagerabschnitte 201, 202, 203 und 204. Gemäß dem in Fig. 2 dargestellten kartesischen Koordinatensystem aus x-, y- und z-Achse, das auch in der weiter unten beschriebenen Fig. 3 wiedergegeben ist, sind die Lagerabschnitte in der y-Richtung des Koordinatensystems nebeneinander angeordnet. Jeder Lagerabschnitt enthält einen entsprechenden Lagerbereich 9 in der Form einer Palette, auf der entsprechende Werkstücke 10 in der Form von Blechen stapelbar sind. Beispielhaft sind für den dritten Lagerbereich von links zwei Stapel von Werkstücken 10 angedeutet.

In vertikaler Richtung (d.h. in z-Richtung des dargestellten Koordinatensystems) befindet sich oberhalb des Lagers 2 die bereits oben erwähnte lineare Aktorik 8, mit der die Bilderfassungseinrichtung 7 linear in y-Richtung bewegbar ist. Die Bewegungsrichtung der Bilderfassungseinrichtung ist dabei durch den Pfeil P angedeutet. Gemäß Fig. 2 befindet sich die Bilderfassungseinrichtung 7 in der Position CP1 oberhalb der linken Palette, wohingegen sie sich in der Position CP2 oberhalb der dritten Palette von links befindet. Beispielhaft ist für die Position CP2 der Detektionsbereich DE der Bilderfassungseinrichtung 7 angedeutet. Die flächige Abdeckung des Detektionsbereichs in vertikaler Draufsicht korreliert mit den entsprechenden Lagerabschnitten 201 bis 204, wie aus der weiter unten beschriebenen Fig. 3 ersichtlich wird.

Gemäß Fig. 2 können Werkstücke 10 für jeden der Lagerabschnitte 201 bis 204 durch entsprechende Positionierung der Bilderfassungseinrichtung 7 oberhalb des jeweiligen Lagerabschnitts erfasst werden. Es können somit Werkstücke in einem in y-Richtung weit ausgedehnten Bereich unter Verwendung entsprechender Bilddaten der Lagerabschnitte mittels der robotischen Vorrichtung 3 gehandhabt werden.

Fig. 3 zeigt in Draufsicht von oben nochmals die vier Lagerabschnitte 201, 202, 203 und 204. Wie man erkennt, haben die Lagerabschnitte einen rechteckigen Umriss. Der Lagerabschnitt 203, welcher der Draufsicht des Detektionsbereichs DE aus Fig. 2 entspricht, ist mit gestrichelten Linien angedeutet. Die anderen Lagerabschnitte sind durch punktierte Linien wiedergegeben. Jeder Lagerabschnitt korreliert mit einer Position der Bilderfassungseinrichtung 7 mittig oberhalb des entsprechenden Lagerabschnitts. Wie anschaulich aus Fig. 3 ersichtlich wird, enthält jeder der Lagerabschnitte 201 bis 204 einen Lagerbereich 9 in der Form einer rechteckigen Palette, wobei jede Palette eindeutig einem Lagerabschnitt zugeordnet ist. Darüber hinaus sind in den Ecken der Lagerabschnitte 201 bis 204 Markierungen M1, M2, ..., M10 mit vorbekannten dreidimensionalen räumlichen Positionen PO1, PO2, ..., PO10 vorgesehen. Die Markierungen mit deren Positionen sind in der Steuereinrichtung 6 als digitale Daten hinterlegt.

Jede der Markierungen M1 bis M10 ist durch zwei gegenüberliegende schwarze Kreissegmente mit einem gemeinsamen Mittelpunkt gebildet. Diese optische Struktur ermöglicht eine sehr genaue Identifikation der Markierungen innerhalb der über die Bilderfassungseinrichtung 7 erfassten Bilddaten ID. Jeder der Lagerabschnitte 201 bis 204 enthält vier Markierungen in den Ecken seines rechteckigen Umrisses. Dabei überlappen die Lagerabschnitte miteinander, so dass für jeden Lagerabschnitt zwei Markierungen auch zu einem benachbarten Lagerabschnitt gehören. Konkret enthält der Lagerabschnitt 201 die Markierungen M1, M2, M3 und M4. Der Lagerabschnitt 202 enthält die Markierungen M3, M4, M5 und M6, wobei die Markierungen M3 und M4 auch zum Lagerabschnitt 201 gehören. Der Lagerabschnitt 203 enthält die Markierungen M5, M6, M7 und M8, wobei die Markierungen M5 und M6 auch zum Lagerabschnitt 202 gehören. Der Lagerabschnitt 204 enthält die Markierungen M7, M8, M9 und M10, wobei die Markierungen M7 und M8 auch zu dem Lagerabschnitt 203 gehören.

Um beispielsweise ein Werkstück in dem Lagerabschnitt 203 zu handhaben, bewegt sich die Bilderfassungseinrichtung 7 mittels der linearen Aktorik 8 in die in Fig. 2 gezeigte Position CP2. Anschließend werden Bilddaten ID über die Bilderfassungseinrichtung 7 erfasst. Diese Bilddaten enthalten die Markierungen M5, M6, M7 und M8. Durch Abgleich der vorbekannten Positionen der Markierungen mit deren Positionen in den Bilddaten kann in an sich bekannter Weise die exakte dreidimensionale Lage der Bilderfassungseinrichtung 7 in deren Position CP2 ermittelt werden. Mit anderen Worten kann instantan eine externe Kalibrierung der Bilderfassungseinrichtung 7 durchgeführt werden. Mittels dieser externen Kalibrierung, d.h. unter Verwendung der Lage der Bilderfassungseinrichtung 7, kann dann durch eine an sich bekannte Auswertung der Bilddaten ID die dreidimensionale Lage eines zu handhabenden Werkstücks auf der Oberseite eines entsprechenden Stapels mit der Steuereinrichtung 6 bestimmt werden und die robotische Vorrichtung zur Handhabung des Werkstücks geeignet angesteuert werden.

Die Anzahl der Markierungen kann in der hier beschriebenen Ausführungsform gering gehalten werden, da mehrere Markierungen gleichzeitig für benachbarte Lagerabschnitte genutzt werden. Ferner wird durch die Formgebung der Markierungen deren hochgenaue Identifikation in den Bilddaten ID sichergestellt und hierdurch die Lagebestimmung der Bilderfassungseinrichtung 7 verbessert.

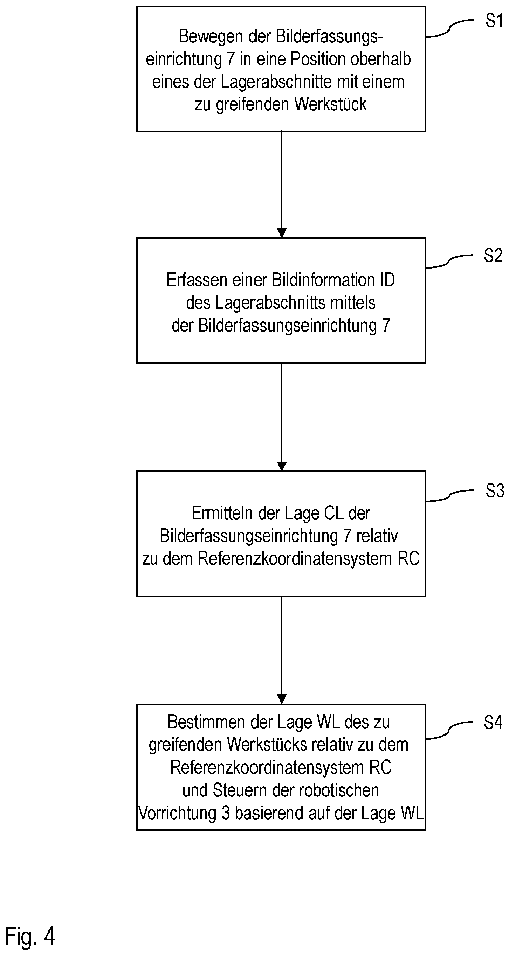

Fig. 4 verdeutlicht nochmals die wesentlichen Schritte, die von der oben beschriebenen Vorrichtung im Zusammenhang mit dem automatisierten Biegen eines Werkstücks durchgeführt werden. Gemäß Schritt S1 wird die Bilderfassungseinrichtung 7 zunächst in die Position desjenigen Lagerabschnitts bewegt, in dem ein Werkstück mit der robotischen Vorrichtung 3 ergriffen werden soll (z.B. Position CP2 in Fig. 2). Anschließend wird in Schritt S2 mit der Bilderfassungseinrichtung 7 eine dreidimensionale Bildinformation ID des Lagerabschnitts erfasst. Diese Bildinformation enthält neben dem zu greifenden Werkstück auch die entsprechenden vier Markierungen. Im Falle, dass sich die Bilderfassungseinrichtung 7 in der Position CP2 befindet, sind dies die Markierungen M5, M6, M7 und M8. Mit einer an sich bekannten Methodik wird dann in Schritt S3 die dreidimensionale Lage CL der Bilderfassungseinrichtung 7 relativ zu dem oben erwähnten ortsfesten Referenzkoordinatensystem RC bestimmt. Mit diesem Schritt wird somit eine externe Kalibrierung der Bilderfassungseinrichtung in der zugehörigen Position erreicht.

Schließlich wird in Schritt S4 unter Verwendung der dreidimensionalen Lage CL der Bilderfassungseinrichtung 7 die dreidimensionale Lage WL des zu greifenden Werkstücks relativ zu dem Referenzkoordinatensystem RC bestimmt und die robotische Vorrichtung 3 basierend auf der Lage WL gesteuert. Mit anderen Worten fährt die robotische Vorrichtung mittels ihrer Gelenkanordnung in das Lager 2 und entnimmt das zu greifende Werkstück auf dem entsprechenden Stapel z.B. über Saugnäpfe.

Das entnommene Werkstück führt die robotische Vorrichtung 3 anschließend der Biegemaschine 5 zur Durchführung des Biegevorgangs zu.

Die im Vorangegangenen beschriebenen Ausführungsformen der Erfindung weisen eine Reihe von Vorteilen auf. Insbesondere wird durch eine bewegbare Bilderfassungseinrichtung die Möglichkeit geschaffen, das Sichtfeld auf gelagerte Werkstücke deutlich zu erweitern, so dass im Rahmen der automatisierten Handhabung von Werkstücken ein flächenmäßig wesentlich größeres Lager für die Werkstücke genutzt werden kann, ohne dass mehrere Bilderfassungseinrichtungen verwendet werden müssen. Dabei wird auch sichergestellt, dass nach einer Bewegung der Bilderfassungseinrichtung diese richtig kalibriert wird, was mittels einer externen Kalibrierung über geeignete Markierungen erreicht wird.

Die Markierungen können je nach Ausführungsform unterschiedlich ausgestaltet sein. Entscheidend ist, dass sie in entsprechenden Bilddaten der Bilderfassungseinrichtung identifiziert werden können. Die Markierungen brauchen dabei nicht zwangsläufig voneinander unterscheidbar sein. Nichtsdestotrotz können die Markierungen auch so ausgestaltet sein, dass sie optisch voneinander unterschieden werden können, was beispielsweise mittels einer optischen Codierung erreicht werden kann. In einer bevorzugten Ausführungsform werden Markierungen gleichzeitig von unterschiedlichen Lagerabschnitten genutzt, so dass deren Anzahl reduziert werden kann.

### Bezugszeichenliste

- 1: Vorrichtung zum automatisierten Biegen von Werkstücken
- 2: Lager
- 201, 202, 203, 204: Lagerabschnitte
- 3: Robotische Vorrichtung
- 4: Führung
- 5: Biegemaschine
- 6: Steuereinrichtung
- 7: Bilderfassungseinrichtung (Kamera)
- 8: Aktorik
- 9: Lagerbereiche (Träger)
- 10: Werkstücke (Bleche)
- RC: Referenzkoordinatensystem
- ID: Bilddaten
- CL: Lage der Bilderfassungseinrichtung
- WL: Lage des zu handhabenden/greifenden Werkstücks
- CP1, CP2: Positionen (Kamerapositionen)
- DE: Detektionsbereich der Bilderfassungseinrichtung
- P: vorgegebene Richtung (Bewegungsrichtung der Bilderfassungseinrichtung)
- M1, M2, ..., M10: Markierungen (passiv oder aktiv)
- PO1, PO2, ..., PO10: Positionen der Markierungen
- S1, S2, S3, S4: Schritte

## Patentansprüche

1. Vorrichtung zum automatisierten Biegen von Werkstücken (10), umfassend ein Lager (2) für Werkstücke (10), eine robotische Vorrichtung (3) zur Handhabung der Werkstücke (10) und eine Biegemaschine (5) zum Verformen zumindest eines Teils der mit der robotischen Vorrichtung (3) gehandhabten Werkstücke (10) über einen Biegevorgang, wobei die Vorrichtung (1) ferner eine Bilderfassungseinrichtung (7) zum Erfassen von Bilddaten (ID) über zu handhabende Werkstücke (10) im Lager (2) sowie eine Steuereinrichtung (6) zum Steuern der robotischen Vorrichtung (3) unter Verwendung der Bilddaten (ID) enthält,
**dadurch gekennzeichnet, dass**
die Bilderfassungseinrichtung (7) über eine Aktorik (8) in unterschiedliche Positionen (CP1, CP2) bewegbar ist, um Bilddaten (ID) von verschiedenen, zu den jeweiligen Positionen (CP1, CP2) gehörigen Lagerabschnitten (201, 202, 203, 204) des Lagers (2) zu erfassen, wobei am Lager (2) eine Mehrzahl von Markierungen (M1, M2, ..., M10) vorgesehen ist, deren Positionen (PO1, PO2, ..., PO10) relativ zu einem Referenzkoordinatensystem (RC) in der Steuereinrichtung (6) gespeichert sind, wobei in einer jeweiligen Position (CP1, CP2) der Bilderfassungseinrichtung (7) im zugehörigen Lagerabschnitt (201, 202, 203, 204) wenigstens zwei Markierungen (M1, M2, ..., M10) der Mehrzahl von Markierungen (M1, M2, ..., M10) enthalten sind und die Steuereinrichtung (6) dazu konfiguriert ist, eine Auswertung der Bilddaten (ID) des zugehörigen Lagerabschnitts (201, 202, 203, 204) durchzuführen, bei der mittels der gespeicherten Positionen (PO1, PO2, ..., PO10) der Markierungen (M1, M2, .., M10) im zugehörigen Lagerabschnitt (201, 202, 203, 204) die Lage (CL) der Bilderfassungseinrichtung (7) und/oder die Lage (WL) eines zu handzuhabenden Werkstücks (10) relativ zu dem Referenzkoordinatensystem (RC) automatisch ermittelt wird.

2. Vorrichtung nach Anspruch 1, **dadurch gekennzeichnet, dass** die Bilderfassungseinrichtung (7) eine 3D-Bilderfassungseinrichtung, vorzugsweise eine 3D-Kameraeinrichtung, zur Erfassung von dreidimensionalen Bilddaten (ID) ist.

3. Vorrichtung nach Anspruch 1 oder 2, **dadurch gekennzeichnet, dass** den Lagerabschnitten (201, 202, 203, 204) separate Lagerbereiche (9) für Werkstücke (10) zugeordnet sind und ein jeweiliger Lagerabschnitt (201, 202, 203, 204) den zugeordneten Lagerbereich (9) in vertikaler Draufsicht komplett abdeckt, wobei ein jeweiliger Lagerbereich (9) vorzugsweise ein Träger zur Ablage von Werkstücken (10) ist.

4. Vorrichtung nach einem der vorhergehenden Ansprüche, **dadurch gekennzeichnet, dass** die Lagerabschnitte (201, 202, ..., 204) in einer vorgegebenen Richtung (P) nebeneinander angeordnet sind.

5. Vorrichtung nach einem der vorhergehenden Ansprüche, **dadurch gekennzeichnet, dass** die Bilderfassungseinrichtung (7) mittels der Aktorik (8) linear bewegbar ist.

6. Vorrichtung nach einem der vorhergehenden Ansprüche, **dadurch gekennzeichnet, dass** alle Markierungen (M1, M2, ..., M10) der Mehrzahl von Markierungen (M1, M2, ..., M10) am Boden des Lagers (2) und/oder bis zu 500 mm über dem Boden angeordnet sind und die Bilderfassungseinrichtung (7) oberhalb des Lagers (2) bewegbar ist.

7. Vorrichtung nach einem der vorhergehenden Ansprüche, **dadurch gekennzeichnet, dass** zumindest drei Lagerabschnitte (201, 202, 203, 204), vorzugsweise zwischen 3 und 10 Lagerabschnitte (201, 202, 203, 204) und besonders bevorzugt vier Lagerabschnitte (201, 202, 203, 204), vorgesehen sind.

8. Vorrichtung nach einem der vorhergehenden Ansprüche, **dadurch gekennzeichnet, dass** die wenigstens zwei Markierungen (M1, M2, ..., M10) in einem jeweiligen Lagerabschnitt (201, 202, 203, 204) zumindest eines Teils der Lagerabschnitte (201, 202, 203, 204) und vorzugsweise in jedem Lagerabschnitt (201, 202, 203, 204) eine Teilmenge der Mehrzahl von Markierungen (201, 202, 203, 204) repräsentieren.

9. Vorrichtung nach einem der vorhergehenden Ansprüche **dadurch gekennzeichnet, dass** die wenigstens zwei Markierungen (M1, M2, ..., M10) in einem jeweiligen Lagerabschnitt (201, 202, 203, 204) zumindest eines Teils der Lagerabschnitte (201, 202, 203, 204) und vorzugsweise in jedem Lagerabschnitt (201, 202, 203, 204) zumindest drei Markierungen (M1, M2, ..., M10), vorzugsweise zumindest vier Markierungen (M1, M2, ..., M10), sind.

10. Vorrichtung nach einem der vorhergehenden Ansprüche, **dadurch gekennzeichnet, dass** eine oder mehrere Markierungen (M1, M2, ..., M10) und vorzugsweise zwei Markierungen (M1, M2, ..., M10) in einem jeweiligen Lagerabschnitt (201, 202, 203, 204) zumindest eines Teils der Lagerabschnitte (201, 202, 203, 204) und vorzugsweise in jedem Lagerabschnitt (201, 202, 203, 204) auch noch zu einem anderen Lagerabschnitt (201, 202, 203, 204) als dem jeweiligen Lagerabschnitt (201, 202, 203, 204) gehören.

11. Vorrichtung nach einem der vorhergehenden Ansprüche, **dadurch gekennzeichnet, dass** ein jeweiliger Lagerabschnitt (201, 202, 203, 204) zumindest eines Teils der Lagerabschnitte (201, 202, 203, 204) und vorzugsweise jeder Lagerabschnitt (201, 202, 203, 204) in vertikaler Draufsicht einen polygonförmigen und insbesondere rechteckigen Umriss aufweist.

12. Vorrichtung nach Anspruch 11, **dadurch gekennzeichnet, dass** in einer oder mehreren Ecken und vorzugsweise in jeder Ecke des polygonförmigen Umrisses jeweils eine Markierung (M1, M2, ..., M10) vorgesehen ist.

13. Vorrichtung nach einem der vorhergehenden Ansprüche, **dadurch gekennzeichnet, dass** die Markierungen (M1, M2, ..., M10) zur Unterscheidbarkeit durch die Steuereinrichtung (6) optisch unterschiedlich ausgestaltet sind und insbesondere eine optische Codierung enthalten.

14. Vorrichtung nach einem der vorhergehenden Ansprüche, **dadurch gekennzeichnet, dass** eine jeweilige Markierung (M1, M2, ..., M10) zumindest eines Teils der Mehrzahl von Markierungen (M1, M2, ..., M10) und insbesondere jede Markierung (M1, M2, ..., M10) zumindest zwei Kreissegmente mit gemeinsamen Segmentmittelpunkt umfasst.

15. Verfahren zum automatisierten Biegen von Werkstücken mit einer Vorrichtung (1) nach einem der vorhergehenden Ansprüche, wobei die Vorrichtung (1) ein Lager (2) für Werkstücke (10), eine robotische Vorrichtung (3) zur Handhabung der Werkstücke (10) und eine Biegemaschine (5) zum Verformen zumindest eines Teils der mit der robotischen Vorrichtung (3) gehandhabten Werkstücke (10) über einen Biegevorgang umfasst und in der Vorrichtung (1) ferner eine Bilderfassungseinrichtung (7) zum Erfassen von Bilddaten (ID) über zu handhabende Werkstücke (10) im Lager (2) und eine Steuereinrichtung (6) zum Steuern der robotischen Vorrichtung (3) unter Verwendung der Bilddaten (ID) vorgesehen sind,
**dadurch gekennzeichnet, dass**
die Bilderfassungseinrichtung (7) über eine Aktorik (8) in unterschiedliche Positionen (CP1, CP2) bewegt wird, um Bilddaten (ID) von verschiedenen, zu den jeweiligen Positionen (CP1, CP2) gehörigen Lagerabschnitten (201, 202, 203, 204) des Lagers (2) zu erfassen, wobei am Lager (2) eine Mehrzahl von Markierungen (M1, M2, ..., M10) vorgesehen ist, deren Positionen (PO1, PO2, .., PO10) relativ zu einem Referenzkoordinatensystem (RC) in der Steuereinrichtung (6) gespeichert sind, wobei in einer jeweiligen Position (CP1, CP2) der Bilderfassungseinrichtung (7) im zugehörigen Lagerabschnitt (201, 202, 203, 204) wenigstens zwei Markierungen (M1, M2, ..., M10) der Mehrzahl von Markierungen (M1, M2, ..., M10) enthalten sind,
die Steuereinrichtung (6) eine Auswertung der Bilddaten (ID) des zugehörigen Lagerabschnitts (201, 202, 203, 204) durchführt, bei der mittels der gespeicherten Positionen (PO1, PO2, ..., PO10) der Markierungen (M1, M2, ..., M10) im zugehörigen Lagerabschnitt (201, 202, 203, 204) die Lage (CL) der Bilderfassungseinrichtung (7) und/oder die Lage (WL) eines handzuhabenden Werkstücks (10) relativ zu dem Referenzkoordinatensystem (RC) automatisch ermittelt wird.
